# EUROPÄISCHE PATENTANMELDUNG

(11) **EP 4 368 939 A1**
(43) Veröffentlichungstag der Anmeldung: **15.05.2024**
(21) Anmeldenummer: 23204560.9
(22) Anmeldetag: 19.10.2023
(51) Int. Cl.: F41G 1/32, G02B 23/12

(54) **OPTOELEKTRONISCHES GERÄT, VISIERSYSTEM, FEUERWAFFE SOWIE VERFAHREN ZUR FOKUSSIERUNG**

(30) Priorität: 10.11.2022 DE 102022129700
(71) Anmelder: Optinova Solutions UG (haftungsbeschränkt), 35606 Solms (DE)
(72) Erfinder: TORGAN, Nikolai, 210041 Vitebsk (BY)
(74) Vertreter: advotec.

(57) **Zusammenfassung**

Die Erfindung betrifft ein optoelektronisches Gerät (10), wobei das optoelektronische Gerät als ein Wärmebildgerät oder ein Nachtsichtgerät zur Verwendung als Monokular und/oder als Vorsatzgerät für eine optische Vorrichtung, insbesondere Zielfernrohr für eine Feuerwaffe, oder als ein Zielgerät für eine Feuerwaffe ausgebildet ist, wobei das optoelektronische Gerät eine Objektiveinheit, eine, vorzugsweise mechanische, Fokussierungseinrichtung (23) und eine Okulareinheit umfasst, wobei die Fokussierungseinrichtung ein seitlich an dem optoelektronischen Gerät angeordnetes Bedienelement (26) aufweist.

## Beschreibung

Die Erfindung betrifft ein optoelektronisches Gerät, wobei das optoelektronische Gerät als ein Wärmebildgerät oder ein Nachtsichtgerät zur Verwendung als Monokular und/oder als Vorsatzgerät für eine optische Vorrichtung, insbesondere Zielfernrohr für eine Feuerwaffe, oder als ein Zielgerät für eine Feuerwaffe ausgebildet ist, wobei das optoelektronische Gerät eine Objektiveinheit, eine, vorzugsweise mechanische, Fokussierungseinrichtung und eine Okulareinheit umfasst. Weiter betrifft die Erfindung ein Visiersystem für eine Feuerwaffe, umfassend ein Zielfernrohr und ein optoelektronisches Gerät. Ferner betrifft die Erfindung eine Feuerwaffe, umfassend ein optoelektronisches Gerät. Letztlich betrifft die Erfindung ein Verfahren zur Fokussierung eines Objekts mittels eines optoelektronischen Geräts.

Ein optoelektronisches Gerät der eingangs genannten Art ist aus dem Stand der Technik hinlänglich bekannt und kommt beispielsweise in Gestalt eines Wärmebildgeräts als Vorsatzgerät für ein Zielfernrohr zum Einsatz, wobei das Wärmebildgerät zusammen mit dem Zielfernrohr als dessen Vorsatzgerät an beispielsweise einem Jagdgewehr angeordnet wird, um ein Objekt bzw. Wild insbesondere bei Dämmerung bzw. Nacht beobachten bzw. anvisieren zu können. Dabei wird typischerweise ein von dem Wild einfallendes infrarotes Lichtsignal bzw. von dem Wild einfallende Infrarotstrahlung mittels einer Objektiveinheit des Wärmebildgeräts auf einen Wärmebildsensor des Wärmebildgeräts fokussiert, welcher ein dem Lichtsignal bzw. der Infrarotstrahlung entsprechendes elektrisches Signal erzeugt, welches nachfolgend mittels einer Elektronik des Wärmebildgeräts verarbeitet wird. Die Elektronik erzeugt dann ihrerseits ein elektrisches Signal, welches nachfolgend einem Mikrodisplay des Wärmebildgeräts zugeleitet wird, mittels welchem ein Bild des Wildes in einem sichtbaren Wellenlängenbereich dargestellt wird, welches sodann mittels einer Okulareinheit des Wärmebildgeräts betrachtet werden kann. Die Fokussierung des Objekts erfolgt dabei üblicherweise mittels einer mechanischen Fokussierungseinrichtung des Wärmebildgeräts, durch deren Bedienung ein Abstand zwischen der Objektiveinheit von dem Wärmebildsensor eingestellt werden kann. Beispielsweise aus der DE 10 2019 132 858 A1 geht ein derartiges Wärmebildgerät hervor.

Eine Bedienung einer Fokussierungseinrichtung eines aus dem Stand der Technik bekannten optoelektronischen Geräts bzw. Wärmebildgeräts erfolgt regelmäßig durch eine Drehung einer Objektiveinheit des optoelektronischen Geräts um eine Längsachse des optoelektronischen Geräts bzw. eine Bewegung der Objektiveinheit entlang der Längsachse. Um ein Objekt, insbesondere Wild, mittels des optoelektronischen Geräts bei an beispielsweise einem Jagdgewehr angeordnetem optoelektronischen Gerät fokussieren zu können, ist es daher erforderlich, bei gehaltenem Jagdgewehr eine Hand vom Jagdgewehr zu nehmen, um mit dieser Hand die Objektiveinheit zur Fokussierung des Objekts drehen zu können. Mit anderen Worten kann das Jagdgewehr während einer Durchführung der Fokussierung des Objekts bzw. eines Zielvorgangs lediglich mit der einen Hand gehalten werden, weil mit der anderen Hand die Drehung der Objektiveinheit erfolgen muss. Dies führt regelmäßig zu Schwierigkeiten bei Bedienern, welche eine Kraft zum einhändigen Halten des Jagdgewehrs nur schwerlich oder sogar gar nicht aufbringen können. Ein Tragen von Jagdbekleidung erschwert die Bedienung einer derart ausgebildeten Fokussierungsrichtung typischerweise zusätzlich. Auch aus sicherheitsrelevanten Aspekten erweist sich eine derart ausgebildete Fokussierungseinrichtung als nachteilhaft.

Die vorstehenden Nachteile ergeben sich nicht nur bei zur Verwendung als Vorsatzgerät ausgebildeten Wärmebildgeräten, sondern auch bei zur Verwendung als Vorsatzgerät ausgebildeten Nachtsichtgeräten, welche regelmäßig einen Restlichtverstärker umfassen, sowie bei Zielgeräten bzw. Digitalzielfernrohren bzw. Wärmebildzielfernrohren bzw. Nachtsichtzielfernrohren, bei denen eine Fokussierung analog erfolgt.

Der vorliegenden Erfindung liegt daher die Aufgabe zugrunde, ein optoelektronisches Gerät, ein Visiersystem, eine Feuerwaffe sowie ein Verfahren zur Fokussierung eines Objekts vorzuschlagen, welches bzw. welche im Hinblick auf eine Fokussierung einfacher bedienbar bzw. einfacher durchführbar ist.

Diese Aufgabe wird durch ein optoelektronisches Gerät mit den Merkmalen des Anspruchs 1, ein Visiersystem mit den Merkmalen des Anspruchs 14, eine Feuerwaffe mit den Merkmalen des Anspruchs 15 sowie ein Verfahren mit den Merkmalen des Anspruchs 16 gelöst.

Das erfindungsgemäße optoelektronische Gerät ist als ein Wärmebildgerät oder ein Nachtsichtgerät zur Verwendung als Monokular und/oder als Vorsatzgerät für eine optische Vorrichtung, insbesondere Zielfernrohr für eine Feuerwaffe, oder als ein Zielgerät für eine Feuerwaffe ausgebildet, wobei das optoelektronische Gerät eine Objektiveinheit, eine, vorzugsweise mechanische, Fokussierungseinrichtung und eine Okulareinheit umfasst, wobei die Fokussierungseinrichtung ein seitlich an dem optoelektronischen Gerät angeordnetes Bedienelement aufweist.

Das optoelektronische Gerät ist als ein Wärmebildgerät oder ein Nachtsichtgerät ausgebildet. Das optoelektronische Gerät kann auch beide dieser Geräte in sich vereinen. Beispielsweise kann das optoelektronische Gerät derart ausgebildet sein, dass ein Betriebsmodus des optoelektronischen Geräts zwischen einem Wärmebildmodus und einem Nachtsichtmodus umgeschaltet werden kann.

Weiter ist das optoelektronische Gerät bzw. Wärmebildgerät bzw. Nachtsichtgerät zur Verwendung als Monokular, das heißt als handhaltbares Gerät zur Beobachtung direkt mit einem Auge, und/oder als Vorsatzgerät für eine optische Vorrichtung, insbesondere Zielfernrohr für eine Feuerwaffe, ausgebildet. Grundsätzlich kann das optoelektronische Gerät als Vorsatzgerät für jede geeignete Art von optischer Vorrichtung, insbesondere Tagesoptik oder ein anderes optoelektronisches Gerät, verwendet werden. Insbesondere kann das optoelektronische Gerät auch als Vorsatzgerät für eine Digitalkamera, eine Videokamera oder ein Spektiv vorgesehen sein. Eine Verbindung des optoelektronischen Geräts mit der optischen Vorrichtung kann mittels eines geeigneten Adapters erfolgen. Die Feuerwaffe kann vorteilhafterweise eine Langwaffe bzw. ein Gewehr, insbesondere ein Jagdgewehr, sein. Grundsätzlich kann das optoelektronische Gerät jedoch in Verbindung mit jeder beliebigen Handfeuerwaffe verwendet werden.

Alternativ ist das optoelektronische Gerät als ein Zielgerät für eine Feuerwaffe ausgebildet. Das Zielgerät kann ein Digitalzielfernrohr, ein Wärmebildzielfernrohr oder ein Nachtsichtzielfernrohr bzw. ein Zielfernrohr mit einem Wärmebildmodus und/oder einem Nachtsichtmodus sein.

Erfindungsgemäß umfasst das optoelektronische Gerät eine Objektiveinheit, eine, vorzugsweise mechanische, Fokussierungseinrichtung und eine Okulareinheit. Die Objektiveinheit und die Okulareinheit können jeweils eine Linsenanordnung aufweisen. Vorteilhafterweise kann die Fokussierungseinrichtung eine mechanische Fokussierungseinrichtung sein. Grundsätzlich ist es jedoch auch denkbar, die Fokussierungseinrichtung als eine elektrische oder elektromechanische Fokussierungseinrichtung auszubilden. Die Fokussierungseinrichtung dient zur Entfernungseinstellung, also zur Einstellung der Objektiveinheit an eine Entfernung eines Objekts.

Erfindungsgemäß weist die Fokussierungseinrichtung ein seitlich an dem optoelektronischen Gerät angeordnetes Bedienelement auf. Die seitliche Anordnung des Bedienelements an dem optoelektronischen Gerät bedeutet vorliegend, dass sich das Bedienelement in einer räumlichen Ausrichtung bzw. Orientierung des optoelektronischen Geräts, in welcher das optoelektronische Gerät bestimmungsgemäß verwendet wird, von einem Bediener des optoelektronischen Geräts aus betrachtet seitlich an dem optoelektronischen Gerät befindet. Die seitliche Anordnung des Bedienelements an dem optoelektronischen Gerät ermöglicht vorteilhaft eine vereinfachte Bedienung der Fokussierungseinrichtung. Wenn das optoelektronische Gerät an einer Feuerwaffe angeordnet wird, kann die Fokussierungseinrichtung nunmehr bei beidhändig gehaltener Feuerwaffe, beispielsweise mittels eines Daumens einer einen Vorderschaft der Feuerwaffe greifenden Hand eines Bedieners, bei einem Zielvorgang bedient werden, ohne dass eine Hand, wie im Stand der Technik, zur Fokussierung des Objekts von der Feuerwaffe genommen werden muss bzw. zur Drehung der Objektiveinheit an die Objektiveinheit greifen muss. Auch bei einer Verwendung des optoelektronischen Geräts als Monokular gestaltet sich die Bedienung der Fokussierungseinrichtung einfacher, da das optoelektronische Gerät bei einer Anvisierung eines Objekts mittels des optoelektronischen Geräts durchgängig beidhändig in einer vorteilhaften Griffposition, bei der beispielsweise beide Daumen im Wesentlichen an einer Unterseite des optoelektronischen Geräts und alle Finger im Wesentlichen an einer Oberseite des optoelektronischen Geräts aufliegen können, gehalten werden kann. Im Ergebnis ist das erfindungsgemäße optoelektronische Gerät damit im Hinblick auf eine Fokussierung einfacher bedienbar.

Weiter kann das Bedienelement linksseitig oder rechtsseitig an dem optoelektronischen Gerät angeordnet sein, insbesondere je nach Händigkeit eines Bedieners. Vorteilhafterweise kann das Bedienelement seitlich nach unten versetzt, benachbart einer Unterseite des optoelektronischen Geräts an dem optoelektronischen Gerät angeordnet sein. Insbesondere, wenn das optoelektronische Gerät dann mit der Unterseite an einer Feuerwaffe anliegt bzw. sich mit der Unterseite in deren unmittelbarer Nähe befindet, kann die Fokussiereinrichtung auf eine einfache Weise mit einem Daumen bedient werden.

Die Fokussierungseinrichtung kann seitlich an dem optoelektronischen Gerät angeordnet sein.

Weiter kann das optoelektronische Gerät einen Bildsensor, insbesondere Wärmebildsensor, oder einen Restlichtverstärker bzw. Bildverstärker bzw. eine Bildwandlerröhre umfassen, je nachdem, ob das optoelektronische Gerät als Wärmebildgerät oder als Nachtsichtgerät ausgebildet ist. Das optoelektronische Gerät kann einen digitalen Bild- bzw. Videosensor umfassen.

Die Fokussierungseinrichtung kann zur Einstellung eines Abstands der Objektiveinheit von dem Bildsensor bzw. dem Restlichtverstärker, insbesondere von einer Photokathode des Restlichtverstärkers bzw. einem Eintrittsfenster des Restlichtverstärkers, ausgebildet sein. Der Restlichtverstärker kann eine Photokathode und/oder einen fluoreszierenden Leuchtschirm aufweisen.

Weiter kann das optoelektronische Gerät eine Displayeinrichtung zur Darstellung eines Bildes umfassen. Das Bild kann mittels der Okulareinheit betrachtet werden.

Mittels der Fokussierungseinrichtung kann der Abstand der Objektiveinheit von dem Bildsensor bzw. Restlichtverstärker dann derart eingestellt werden, dass ein von einem mittels des optoelektronischen Geräts beobachteten bzw. anvisierten Objekt einfallendes Lichtsignal bzw. von dem mittels des optoelektronischen Geräts beobachteten bzw. anvisierten Objekt einfallende elektromagnetische Strahlung mittels der Objektiveinheit auf den Bildsensor bzw. Restlichtverstärker bzw. die Photokathode fokussiert werden kann. Der Bildsensor bzw. Restlichtverstärker kann grundsätzlich zur Aufnahme von Lichtsignalen bzw. elektromagnetischer Strahlung aus unterschiedlichen Wellenlängenbereichen ausgebildet sein, wie beispielsweise aus einem UV-Bereich, einem IR-Bereich oder einem Bereich von sichtbarem Licht, bzw. auf diese Lichtsignale sensitiv sein. Insbesondere kann der Bildsensor speziell ein Wärmebildsensor sein. Der Bildsensor bzw. Restlichtverstärker kann ein dem Lichtsignal entsprechendes elektrisches Signal erzeugen, welches von einer Elektronik bzw. Verarbeitungseinrichtung des optoelektronischen Geräts verarbeitet werden kann. Die Elektronik bzw. die Verarbeitungseinrichtung kann dann ihrerseits ein Signal erzeugen, welches der Displayeinrichtung zugeleitet werden kann, welche eine Darstellung eines Bildes, insbesondere des Objekts, in einem sichtbaren Wellenlängenbereich erzeugen kann, welches sodann mittels der Okulareinheit betrachtet werden kann. Die Displayeinrichtung kann dabei vorteilhaft ein Mikrodisplay sein. Mittels der Okulareinheit kann ein Bediener das mittels der Displayeinrichtung dargestellte Bild gegebenenfalls noch weiter im Hinblick auf eine Schärfe einstellen.

Vorteilhafterweise kann das Bedienelement bzw. die Fokussierungseinrichtung derart an dem optoelektronischen Gerät angeordnet bzw. ausgebildet sein, dass das Bedienelement bzw. die Fokussierungseinrichtung bei einer Anordnung des optoelektronischen Geräts an der Feuerwaffe bei beidhändig gehaltener Feuerwaffe bedienbar ist.

Vorteilhafterweise kann das Bedienelement drehbar ausgebildet sein, insbesondere in Gestalt eines Bedienrads. Das Bedienrad kann eine Mehrzahl von über das Bedienrad umfangsverteilten, radialen Vorsprüngen aufweisen, an welchen zur vereinfachten Bedienung des Bedienrads ein Daumen eines Bedieners anlegbar sein kann.

Um eine weiter vereinfachte Bedienung der Fokussierungseinrichtung zu ermöglichen, kann das Bedienelement um eine im Wesentlichen parallel zu einer Längsachse des optoelektronischen Geräts verlaufende Drehachse des Bedienelements drehbar sein.

Besonders einfach ist die Fokussierungseinrichtung bedienbar, wenn das Bedienelement in einem Bereich seitlich benachbart der Okulareinheit angeordnet ist.

Vorteilhafterweise kann die Fokussierungseinrichtung ein drehbares Justierschraubenelement aufweisen. Das Justierschraubenelement kann um eine im Wesentlichen parallel zu der Längsachse des optoelektronischen Geräts verlaufende Drehachse des Justierschraubenelements drehbar sein. Das Bedienelement kann an einem ersten Ende des Justierschraubenelements angeordnet sein oder aber auch von dem Justierschraubenelement an dem ersten Ende ausgebildet werden. Folglich kann das Justierschraubenelement zusammen mit dem Bedienelement um eine gemeinsame Drehachse gedreht werden bzw. durch eine Bedienung des Bedienelements gedreht werden. Durch eine kontrollierte Drehung des Bedienelements bzw. des Justierschraubenelements kann dann ein gewünschter Abstand der Objektiveinheit von dem Bildsensor bzw. Restlichtverstärker eingestellt werden.

Vorteilhafterweise kann sich das Justierschraubenelement parallel zu der Längsachse erstrecken.

Ferner kann sich das Justierschraubenelement von einem Bereich seitlich benachbart der Objektiveinheit bzw. eines vorderen Geräteabschnitts des optoelektronischen Geräts bis zumindest zu einem Bereich seitlich benachbart eines mittleren Geräteabschnitts des optoelektronischen Geräts erstrecken. Vorteilhafterweise kann sich das Justierschraubenelement von dem Bereich seitlich benachbart der Objektiveinheit bzw. des vorderen Geräteabschnitts des optoelektronischen Geräts bis zu einem Bereich seitlich benachbart der Okulareinheit bzw. eines hinteren Geräteabschnitts des optoelektronischen Geräts erstrecken.

Weiter kann die Fokussierungseinrichtung ein das Justierschraubenelement mit der Objektiveinheit verbindendes Verbindungselement aufweisen. Eine bei der Drehung des Justierschraubenelements erfolgende Stellbewegung des Justierschraubenelements entlang der Drehachse des Justierschraubenelements kann so mittels des mit der Objektiveinheit und dem Justierschraubenelement verbundenen Verbindungselements auf die Objektiveinheit einwirken bzw. auf die Objektiveinheit übertragen werden, so dass die Objektiveinheit zur Einstellung des Abstands der Objektiveinheit von dem Bildsensor bzw. Restlichtverstärker parallel zu der Drehachse bzw. entlang der Längsachse bewegt werden kann. Das Verbindungselement kann einerends an der Objektiveinheit befestigt und anderenends formschlüssig mit einem zweiten Ende des Justierschraubenelements verbunden sein. Dabei kann das Verbindungselement anderenends in eine radial zu der Drehachse des Justierschraubenelements verlaufende Umfangsnut des Justierschraubenelements formschlüssig eingreifen.

Vorteilhafterweise kann die Fokussierungseinrichtung ein das Justierschraubenelement wenigstens abschnittsweise aufnehmendes Hülsenelement aufweisen. Das Justierschraubenelement kann ein Gewinde aufweisen, das mit einem Gegengewinde des Hülsenelements in Eingriff stehen kann.

Vorteilhafterweise kann das optoelektronische Gerät ein, vorzugsweise aus Aluminium und/oder Kunststoff ausgebildetes, Gehäuse umfassen. Vorteilhafterweise kann das Gehäuse mehrstückig ausgebildet sein. Das Gehäuse kann die Objektiveinheit und/oder den Bildsensor bzw. Restlichtverstärker und/oder die Displayeinrichtung und/oder die Okulareinheit und/oder die Fokussierungseinrichtung schützend aufnehmen. Die Fokussierungseinrichtung kann ein eigenes Gehäuse aufweisen, welches an einem Gehäuse des optoelektronischen Geräts angeordnet sein kann. Jedoch kann die Fokussierungseinrichtung, insbesondere das Justierschraubenelement, auch zusammen mit übrigen Bauteilen des optoelektronischen Geräts, insbesondere mit der Objektiveinheit und der Okulareinheit, in einem gemeinsamen Gehäuse des optoelektronischen Geräts angeordnet sein.

Weiter kann das optoelektronische Gerät einen die Objektiveinheit, den Bildsensor bzw. Restlichtverstärker, die Displayeinrichtung und die Okulareinheit aufweisenden Grundabschnitt und einen die Fokussierungseinrichtung aufweisenden Seitenabschnitt umfassen. Der Seitenabschnitt bzw. die Fokussierungseinrichtung kann dann seitlich an dem Grundabschnitt angeordnet sein, beispielsweise mittels Schraubenmitteln an dem Grundabschnitt befestigt sein. Der Grundabschnitt kann einen die Objektiveinheit aufweisenden vorderen Geräteabschnitt, einen den Bildsensor bzw. Restlichtverstärker und die Displayeinrichtung aufweisenden mittleren Geräteabschnitt und einen die Okulareinheit aufweisenden hinteren Geräteabschnitt aufweisen. Die drei vorgenannten Geräteabschnitte können mittels Schraubenmitteln miteinander verbunden sein. Der vordere und der hintere Geräteabschnitt können im Querschnitt im Wesentlichen kreisförmig ausgebildet sein, während der mittlere Geräteabschnitt im Querschnitt im Wesentlichen rechteckförmig bzw. quadratförmig ausgebildet sein kann.

Weiter kann das optoelektronische Gerät einen Adapter zur Verbindung des optoelektronischen Geräts mit der optischen Vorrichtung umfassen. Der Adapter kann an der Okulareinheit angeordnet werden, sodass nachfolgend die optische Vorrichtung an den Adapter angebunden werden kann.

Das Zielgerät kann als ein Digitalzielfernrohr, Wärmebildzielfernrohr oder als Nachtsichtzielfernrohr ausgebildet sein.

Das erfindungsgemäße Visiersystem für eine Feuerwaffe umfasst ein Zielfernrohr und ein erfindungsgemäßes optoelektronisches Gerät.

Die erfindungsgemäße Feuerwaffe umfasst ein erfindungsgemäßes optoelektronisches Gerät. Die erfindungsgemäße Feuerwaffe kann das erfindungsgemäße Visiersystem umfassen. Vorteilhafterweise kann die Feuerwaffe eine Langfeuerwaffe bzw. ein Gewehr, insbesondere ein Jagdgewehr, sein.

Bei dem erfindungsgemäßen Verfahren zur Fokussierung eines Objekts mittels eines optoelektronischen Geräts ist das optoelektronische Gerät als ein Wärmebildgerät oder ein Nachtsichtgerät zur Verwendung als Monokular und/oder als Vorsatzgerät für eine optische Vorrichtung, insbesondere Zielfernrohr für eine Feuerwaffe, oder als ein Zielgerät für eine Feuerwaffe ausgebildet, wobei das optoelektronische Gerät eine Objektiveinheit und eine Okulareinheit umfasst, wobei die Fokussierung mittels einer, vorzugsweise mechanischen, Fokussierungseinrichtung des optoelektronischen Geräts erfolgt, wobei die Fokussierung durch eine, vorzugsweise nur mittels eines Daumens eines Bedieners ausgeführte, Bedienung eines seitlich an dem optoelektronischen Gerät angeordneten Bedienelements der Fokussierungseinrichtung erfolgt. Zu den vorteilhaften Wirkungen des erfindungsgemäßen Verfahrens wird auf die Vorteilsbeschreibung des erfindungsgemäßen optoelektronischen Geräts verwiesen.

Vorteilhafterweise kann das optoelektronische Gerät an einer Feuerwaffe angeordnet werden, wobei die Fokussierung bei beidhändig gehaltener Feuerwaffe erfolgen kann. Das optoelektronische Gerät kann zusammen mit einem Zielfernrohr als dessen Vorsatzgerät oder als Zielgerät an der Feuerwaffe angeordnet werden.

Weitere vorteilhafte Ausführungsformen des Verfahrens ergeben sich aus den Merkmalsbeschreibungen der auf den Vorrichtungsanspruchs 1 rückbezogenen Unteransprüche.

Nachfolgend wird eine bevorzugte Ausführungsform der Erfindung unter Bezugnahme auf die beigefügten Zeichnungen näher erläutert.

Es zeigen:
- **Fig. 1**: eine perspektivische Ansicht eines optoelektronischen Geräts,
- **Fig. 2**: eine Schnittansicht des optoelektronischen Geräts.

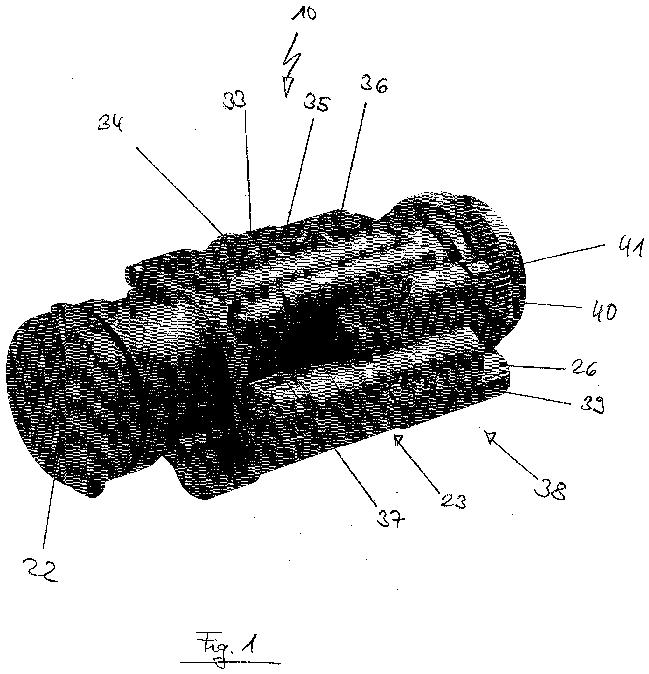

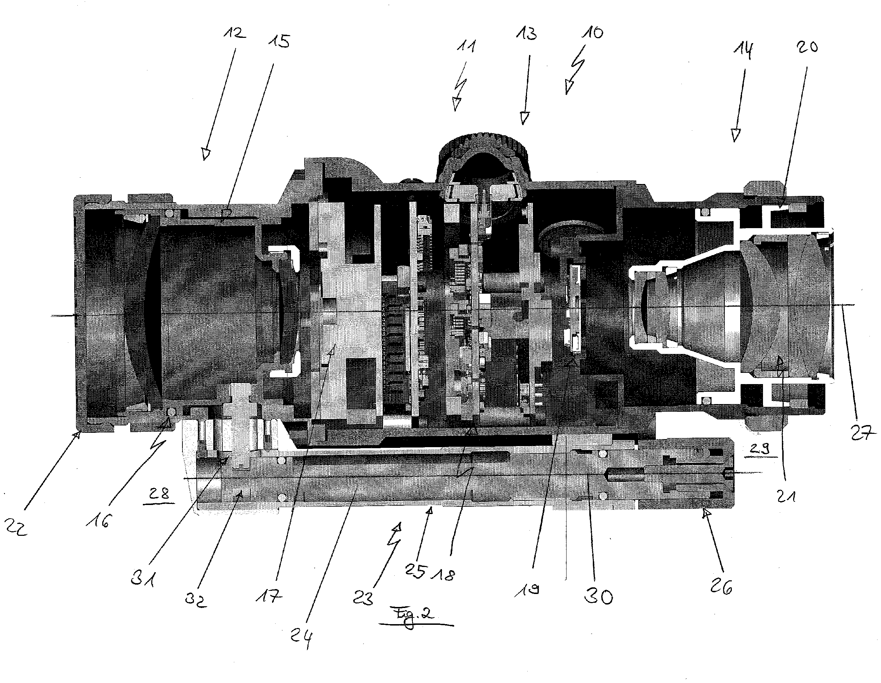

Eine Zusammenschau der **Fig. 1** und **2** zeigt ein als ein Wärmebildgerät ausgebildetes optoelektronisches Gerät 10, welches einen Grundabschnitt 11 umfasst, wobei der Grundabschnitt 11 einen vorderen Geräteabschnitt 12, einen mittleren Geräteabschnitt 13 und einen hinteren Gerätabschnitt 14 umfasst. Dabei sind der vordere Geräteabschnitt 12 und der hintere Geräteabschnitt 14 im Querschnitt im Wesentlichen kreisförmig ausgebildet, während der mittlere Geräteabschnitt 13 im Querschnitt im Wesentlichen quadratförmig ausgebildet ist. Der vordere Geräteabschnitt 12 weist eine Objektiveinheit 15 mit einer Linsenanordnung 16 auf. Weiter weist der mittlere Geräteabschnitt 13 einen als ein Wärmebildsensor ausgebildeten Bildsensor 17, eine Elektronik 18 und eine Displayeinrichtung 19 auf. Ferner weist der hintere Geräteabschnitt 14 eine Okulareinheit 20 mit einer Linsenanordnung 21 auf. Die Objektiveinheit 15 ist mit einem Schutzdeckel 22 des optoelektronischen Geräts 10 abgedeckt.

Weiter umfasst das optoelektronische Gerät 10 eine Fokussierungseinrichtung 23 zur Einstellung eines hier nicht gezeigten Abstands der Objektiveinheit 15 von dem Bildsensor 17, welche seitlich, nach unten versetzt an dem Grundabschnitt 11 angeordnet ist. Die Fokussierungseinrichtung 23 weist ein Justierschraubenelement 24 und ein Hülsenelement 25, welches das Justierschraubenelement 24 abschnittsweise aufnimmt, auf. Weiter weist die Fokussierungseinrichtung 23 ein einerends an dem Justierschraubenelement 24 angeordnetes, als ein Bedienrad ausgebildetes Bedienelement 26 auf. Das Justierschraubenelement 24 erstreckt sich parallel zu einer Längsachse 27 des optoelektronischen Geräts 10 von einem Bereich 28 seitlich benachbart der Objektiveinheit 15 bzw. des vorderen Geräteabschnitts 12 bis zu einem Bereich 29 seitlich benachbart der Okulareinheit 20 bzw. des hinteren Geräteabschnitts 15, wobei das Bedienelement 26 in dem Bereich 29 seitlich benachbart der Okulareinheit 20 bzw. des hinteren Geräteabschnitts 15 angeordnet ist. Das Bedienelement 26 ist zusammen mit dem Justierschraubenelement 24 um eine gemeinsame, parallel zu der Längsachse 27 verlaufende Drehachse 30 drehbar, wobei das Justierschraubenelement 24 bei der Drehung in dem Hülsenelement 25 entlang der Drehachse 30 eine Stellbewegung vollzieht. Zur Übertragung der Stellbewegung des Justierschraubenelements 24 auf die Objektiveinheit 15 weist die Fokussierungseinrichtung 23 ein das Justierschraubenelement 24 mit der Objektiveinheit 15 verbindendes Verbindungselement 31 auf. Dabei ist das Verbindungselement 31 anderenends des Justierschraubenelements 24 angeordnet. Das Verbindungselement 31 greift einerends formschlüssig in eine radial zu der Drehachse 30 verlaufende Umfangnut 32 des Justierschraubenelements 24 ein und ist anderenends fest mit der Objektiveinheit 15 verbunden.

Weiter weist das optoelektronische Gerät 10 auf einer Oberseite 33 des Grundabschnitts 11 Bedienknöpfe 34, 35, 36 auf. Ferner weist das optoelektronische Gerät einen an einer Seite 37 des Grundabschnitts 11, welche an die Oberseite 33 und an eine der Oberseite 33 gegenüberliegende, hier nicht gezeigte Unterseite des Grundabschnitts 11 angrenzt, angeordneten Seitenabschnitt 38 auf, welcher eine Batterieaufnahme 39, einen Bedienknopf 40 sowie ein dreh- und drückbares Bedienelement 41 aufweist. Auch die Fokussierungseinrichtung 23 ist Bestandteil des Seitenabschnitts 38, das heißt der Seitenabschnitt 38 weist auch die Fokussierungseinrichtung 23 auf. Die Fokussierungseinrichtung 23 ist seitlich nach unten versetzt, unterhalb der Batterieaufnahme 39 bzw. dem Bedienknopf 40 bzw. dem Bedienelement 41 und benachbart der Unterseite an dem Grundabschnitt 11 angeordnet. Bei einer Anordnung des optoelektronischen Geräts 10 zusammen mit einem hier nicht gezeigten Zielfernrohr als dessen Vorsatzgerät an einer hier ebenfalls nicht gezeigten Feuerwaffe kann das Bedienelement 26 bei beidhändig gehaltener Feuerwaffe bei einem Zielvorgang mit einem Daumen bedient werden, ohne dass eine einen Vorderschaft der Feuerwaffe greifende Hand von der Feuerwaffe bzw. dem Vorderschaft genommen werden muss. Freilich ist das optoelektronische Gerät 10 auch als Monokular verwendbar und dann vergleichsweise einfach bedienbar.

## Patentansprüche

1. Optoelektronisches Gerät (10), wobei das optoelektronische Gerät als ein Wärmebildgerät oder ein Nachtsichtgerät zur Verwendung als Monokular und/oder als Vorsatzgerät für eine optische Vorrichtung, insbesondere Zielfernrohr für eine Feuerwaffe, oder als ein Zielgerät für eine Feuerwaffe ausgebildet ist, wobei das optoelektronische Gerät eine Objektiveinheit (15), eine, vorzugsweise mechanische, Fokussierungseinrichtung (23) und eine Okulareinheit (20) umfasst, **dadurch gekennzeichnet,**
**dass** die Fokussierungseinrichtung ein seitlich an dem optoelektronischen Gerät angeordnetes Bedienelement (26) aufweist.

2. Optoelektronisches Gerät nach Anspruch 1,
**dadurch gekennzeichnet,**
**dass** das optoelektronische Gerät (10) einen Bildsensor (17) oder einen Restlichtverstärker umfasst.

3. Optoelektronisches Gerät nach Anspruch 1 oder 2,
**dadurch gekennzeichnet,**
**dass** das Bedienelement (26) derart seitlich an dem optoelektronischen Gerät (10) angeordnet ist, dass das Bedienelement bei einer Anordnung des optoelektronischen Geräts an einer Feuerwaffe bei beidhändig gehaltener Feuerwaffe bedienbar ist.

4. Optoelektronisches Gerät nach einem der vorangehenden Ansprüche, **dadurch gekennzeichnet,**
**dass** das Bedienelement (26) drehbar ausgebildet ist.

5. Optoelektronisches Gerät nach Anspruch 4,
**dadurch gekennzeichnet,**
**dass** das Bedienelement (26) um eine im Wesentlichen parallel zu einer Längsachse (27) des optoelektronischen Geräts (10) verlaufende Drehachse (30) des Bedienelements drehbar ist.

6. Optoelektronisches Gerät nach einem der vorangehenden Ansprüche, **dadurch gekennzeichnet,**
**dass** das Bedienelement (26) in einem Bereich (29) seitlich benachbart der Okulareinheit (20) angeordnet ist.

7. Optoelektronisches Gerät nach einem der vorangehenden Ansprüche, **dadurch gekennzeichnet,**
**dass** die Fokussierungseinrichtung (23) ein drehbares Justierschraubenelement (24) aufweist.

8. Optoelektronisches Gerät nach Anspruch 7,
**dadurch gekennzeichnet,**
**dass** sich das Justierschraubenelement (24) im Wesentlichen parallel zu einer Längsachse (27) des optoelektronischen Geräts (10) erstreckt.

9. Optoelektronisches Gerät nach Anspruch 7 oder 8,
**dadurch gekennzeichnet,**
**dass** sich das Justierschraubenelement (24) von einem Bereich (28) seitlich benachbart der Objektiveinheit (15) bis zu einem Bereich (29) seitlich benachbart der Okulareinheit (20) erstreckt.

10. Optoelektronisches Gerät nach einem der Ansprüche 7 bis 9,
**dadurch gekennzeichnet,**
**dass** die Fokussierungseinrichtung (23) ein das Justierschraubenelement (24) mit der Objektiveinheit (15) verbindendes Verbindungselement (31) aufweist.

11. Optoelektronisches Gerät nach einem der Ansprüche 7 bis 10,
**dadurch gekennzeichnet,**
**dass** die Fokussierungseinrichtung (23) ein das Justierschraubenelement (24) wenigstens abschnittsweise aufnehmendes Hülsenelement (25) aufweist.

12. Optoelektronisches Gerät nach einem der vorangehenden Ansprüche, **dadurch gekennzeichnet,**
**dass** das optoelektronische Gerät (10) ein, vorzugsweise aus Aluminium und/oder Kunststoff ausgebildetes, Gehäuse umfasst.

13. Optoelektronisches Gerät nach einem der vorangehenden Ansprüche, **dadurch gekennzeichnet,**
**dass** Zielgerät als ein Digitalzielfernrohr, ein Wärmebildzielfernrohr oder ein Nachtsichtzielfernrohr ausgebildet ist.

14. Visiersystem für eine Feuerwaffe, umfassend ein Zielfernrohr und ein optoelektronisches Gerät (10) nach einem der vorangehenden Ansprüche.

15. Feuerwaffe, umfassend ein optoelektronisches Gerät (10) nach einem der Ansprüche 1 bis 13.

16. Verfahren zur Fokussierung eines Objekts mittels eines optoelektronischen Geräts (10), wobei das optoelektronische Gerät als ein Wärmebildgerät oder ein Nachtsichtgerät zur Verwendung als Monokular und/oder als Vorsatzgerät für eine optische Vorrichtung, insbesondere Zielfernrohr für eine Feuerwaffe, oder als ein Zielgerät für eine Feuerwaffe ausgebildet ist, wobei das optoelektronische Gerät eine Objektiveinheit (15) und eine Okulareinheit (20) umfasst, wobei die Fokussierung mittels einer, vorzugsweise mechanischen, Fokussierungseinrichtung (23) des optoelektronischen Geräts erfolgt,
**dadurch gekennzeichnet,**
**dass** die Fokussierung durch eine, vorzugsweise nur mittels eines Daumens eines Bedieners ausgeführte, Bedienung eines seitlich an dem optoelektronischen Gerät angeordneten Bedienelements (26) der Fokussierungseinrichtung erfolgt.

17. Verfahren nach Anspruch 16,
**dadurch gekennzeichnet,**
**dass** das optoelektronische Gerät (10) an einer Feuerwaffe angeordnet wird, wobei die Fokussierung bei beidhändig gehaltener Feuerwaffe erfolgt.
